# FASCICULE DE BREVET EUROPEEN

(11) **EP 4 444 579 B1**
(45) Date de publication et mention de la délivrance du brevet: **10.09.2025**
(21) Numéro de dépôt: 22834908.0
(22) Date de dépôt: 07.12.2022
(51) Int. Cl.: B60Q 1/04, B60R 11/00, F16F 1/14, F16F 1/02, B60R 11/04

(54) **DISPOSITIF FONCTIONNEL D'UN VÉHICULE AUTOMOBILE**
FUNKTIONSEINRICHTUNG FÜR EIN KRAFTFAHRZEUG
FUNCTIONAL DEVICE FOR A MOTOR VEHICLE

(30) Priorité: 08.12.2021 FR 2113157
(43) Date de publication de la demande: 16.10.2024
(73) Titulaire: Valeo Vision, 93012 Bobigny Cedex (FR)
(72) Inventeur: LE TOUMELIN, Remi, 93012 BOBIGNY CEDEX (FR); RASOLDIER, Nirina, 93012 BOBIGNY CEDEX (FR)
(74) Mandataire: Valeo Visibility
(86) Numéro de dépôt international: PCT/EP2022/084879
(87) Numéro de publication internationale: WO 2023/104935

(56) Documents cités:
- EP-A1- 2 241 478
- EP-A2- 1 431 117
- WO-A1-2016/193635
- DE-A1- 10 258 626
- DE-A1- 2 727 517
- DE-A1- 3 802 104
- KR-A- 20040 064 045
- US-A- 4 466 646

## Description

L'invention concerne le domaine de l'automobile. Plus précisément, l'invention concerne le domaine de l'amortissement de choc subi par un dispositif fonctionnel de véhicule automobile.

Dans le domaine automobile, les dispositifs lumineux récents ont tendance à s'élargir, afin de participer pleinement à l'aspect esthétique du véhicule automobile, tant pour les projecteurs avant que pour les feux arrière. Un projecteur avant peut notamment désormais former une majeure partie voire la totalité de la calandre d'un véhicule automobile. Dès lors, la surface d'un dispositif lumineux susceptible de subir un impact ou un choc s'accroît.

Par ailleurs, dans le cadre d'une navigation semi-autonome ou autonome d'un véhicule automobile, il devient usuel d'intégrer dans un dispositif lumineux de ce véhicule un ou plusieurs capteurs susceptibles d'acquérir des informations relatives à l'environnement du véhicule. Dès lors, le prix d'un tel dispositif lumineux s'accroît et les frais de remplacement en cas de dommages causés par un impact ou un choc deviennent prohibitifs. En outre, les différents éléments contenus dans le dispositif lumineux, qu'il s'agisse des modules lumineux ou des capteurs, requièrent un réglage précis. Ainsi, un simple impact ou un contact accidentel sur le dispositif lumineux peut perturber ce réglage de sorte qu'une réparation soit alors nécessaire.

Il existe ainsi un besoin pour un dispositif lumineux capable d'encaisser ou d'amortir un choc ou un impact sans que cela ne perturbe l'agencement interne et le réglage des différents éléments qu'il contient.

Il est nécessaire en particulier que l'amortissement de ces chocs puisse se faire de façon répétable et réversible sans impacter le réglage des différents éléments qu'il contient. En revanche, il est nécessaire que des vibrations, induites par le déplacement du véhicule automobile, ne provoquent pas ou peu de dérèglement des dispositifs.

Cette problématique peut être élargie à d'autres dispositifs ou blocs fonctionnels, autre qu'un dispositif lumineux, d'un véhicule automobile, et notamment des dispositifs de détection de la présence ou de la position d'un obstacle dans l'environnement du véhicule, des radiateurs, des ventilateurs ou des climatiseurs, des écrans, des panneaux ou des interfaces de l'habitacle du véhicule.

Les documents US 4 466 646 A et DE 102 58 626 A1 divulguent des dispositifs fonctionnels de véhicule automobile comprenant un système d'amortissement suivant l'art antérieur.

La présente invention se place ainsi dans ce contexte et vise à répondre à ce besoin.

A ces fins, l'invention a pour objet un dispositif fonctionnel d'un véhicule automobile, comportant une platine, un boîtier et au moins un module fonctionnel agencé dans le boîtier, le boîtier étant monté mobile sur la platine par au moins un organe élastiquement déformable apte à rappeler le boîtier vers une position de repos, dans lequel la platine comporte au moins une butée et dans lequel le ou chaque organe élastiquement déformable comporte un ressort fixé au boîtier et coopérant avec la ou l'une desdites butées de la platine, caractérisé en ce que le ressort comporte un ressort de torsion avec deux branches et deux bras, chaque bras s'étendant à partir de l'une des branches dudit ressort de torsion, et venant au contact d'une face latérale de la butée, de part et d'autre de la butée.

Dans l'invention, la platine forme ainsi une structure rigide sur laquelle le boîtier est fixé. Il peut s'agir indifféremment d'un châssis, intérieur ou extérieur, du véhicule automobile ou d'un cadre intermédiaire interposé entre ce châssis et le boîtier. Le module fonctionnel peut être un module lumineux destiné à une fonction d'éclairage de la route, de signalisation lumineuse ou d'éclairage de l'intérieur du véhicule automobile, ou encore un module de détection de la position et/ou de la présence d'un obstacle dans l'environnement du véhicule, comme un radar, un lidar ou une caméra, ou encore un radiateur, un ventilateur ou un climatiseur du véhicule, ou encore une boite de vitesse, un écran ou une interface de l'habitacle du véhicule. Lors d'un choc sur le dispositif fonctionnel, le boîtier peut alors reculer vis-à-vis de la platine qui reste fixe. Ce recul permet ainsi d'amortir le choc et donc d'éviter d'endommager le module fonctionnel et les autres éléments éventuels prévus dans le boîtier. Les bras du ressort venant au contact de la face latérale de part et d'autre de la butée, le recul du boîtier vis-à-vis de la platine, sous l'effort du choc, vient ainsi provoquer un déplacement des bras, du fait du contact avec la butée, et donc une déformation du ressort de torsion provoquant ainsi le rappel du boîtier vers sa position de repos. En outre, la combinaison de ces bras et de la face latérale de la butée permet ainsi de définir un comportement variable, voire délibérément non linéaire de la déformation du ressort de torsion, pour par exemple définir un seuil de rétention du ressort en-dessous duquel le ressort de torsion ne se déforme peu ou pas.

Le dispositif fonctionnel peut être un dispositif lumineux, notamment un projecteur avant (encore appelé phare de véhicule), un feu arrière, un feu latéral ou répétiteur, une grille avant illuminée, un panneau lumineux agencé sur la face avant ou arrière du véhicule. Ce dispositif lumineux peut comprendre un module fonctionnel tel qu'un module lumineux destiné à une fonction d'éclairage de la route, lorsqu'il s'agit d'un projecteur avant, de signalisation lumineuse ou d'éclairage de l'intérieur du véhicule automobile, ou encore un module de détection de la position et/ou de la présence d'un obstacle dans l'environnement du véhicule, comme un radar, un lidar ou une caméra, ou encore un radiateur, un ventilateur, un écran ou une interface de l'habitacle du véhicule.

Ce dispositif lumineux peut ainsi être un projecteur avant (encore appelé phare de véhicule), un feu arrière, un feu latéral ou répétiteur, une grille avant illuminée, un panneau lumineux agencé sur la face avant ou arrière du véhicule.

Le dispositif fonctionnel peut être également tout dispositif fonctionnel comprenant un module fonctionnel tel qu'un climatiseur du véhicule, ou encore une boîte de vitesse.

Avantageusement, chaque bras s'étend depuis l'une des branches du ressort en faisant un angle avec cette branche de sorte que les bras se croisent. De la sorte, les bras se croisent derrière la butée, le ressort étant ainsi verrouillé sur cette butée. Si on le souhaite, chaque bras pourra s'étendre depuis sa branche selon un angle tel que les bras fassent un angle entre eux sensiblement égal à 45°.

Avantageusement toujours, ladite face latérale de la butée présente un profil définissant une came coopérant avec chacun desdits bras. Cette came permet d'une part de définir un seuil de rétention du ressort et d'autre part de moduler l'effort de recul du boîtier.

Par exemple, la came pourra être agencée pour que le ressort de torsion subisse une déformation seulement si un effort supérieur à un seuil donné est exercé sur le boîtier. Ce seuil de rétention permet d'éviter des déplacements du boîtier vis-à-vis de la platine qui seraient susceptibles d'être causés par des vibrations dues au déplacement du véhicule automobile.

De façon alternative ou cumulative, la came est agencée pour que l'évolution de l'angle entre les bras du ressort provoqué par un effort exercé sur le boîtier soit non linéaire. En d'autres termes, la déformation du ressort de torsion, et donc la force de rappel exercée par ce ressort n'est pas linéaire et il est possible de contrôler la façon dont le boîtier recule vis-à-vis de la platine et est rappelé vers sa position de repos. On pourra par exemple déterminer un profil de came permettant un recul important du boîtier en début de course puis plus faible à l'approche de la fin de course. En variante, on pourra par exemple déterminer un profil de came limitant le recul du boîtier en début de course pour ensuite autoriser un recul plus important à l'approche de la fin de course.

Si on le souhaite, la face latérale de la butée peut comporter un rebord contre lequel viennent en appui lesdits bras du ressort. Le rebord pourra s'étendre, de façon continue ou discontinue, sur tout ou partie du pourtour de la face latérale.

Avantageusement, l'extrémité de chacun des bras est recourbée pour former un crochet. Ce crochet vient ainsi contre la butée lors de l'écartement du bras pour définir une position de fin de course du ressort. De préférence, le profil du crochet pourra être agencé pour épouser le profil de la face latérale de la butée.

Dans un mode de réalisation de l'invention, la platine comprend des organes de fixation du dispositif fonctionnel à un châssis du véhicule et la platine comporte deux organes de guidage, le boîtier comporte au moins deux organes de positionnement, chaque organe de positionnement étant associé à l'un des organes de guidage en étant apte à venir au contact d'au moins un point de cet organe de guidage associé pour définir ladite position de repos du boîtier sur la platine, le boîtier étant monté mobile, selon au moins trois degrés de liberté, sur la platine par ledit au moins un organe élastiquement déformable apte à rappeler le boîtier vers ladite position de repos.

Dans un mode de réalisation de l'invention, la butée est montée au droit d'un des organes de guidage et le ressort dudit organe élastiquement déformable est fixé sur l'un des organes de positionnement. Avantageusement, le ressort de torsion dudit organe élastiquement déformable est enroulé sur ledit organe de positionnement. Selon cette caractéristique, le ressort de torsion forme ainsi une charnière permettant le pivotement du boîtier vis-à-vis de la platine autour d'un axe passant par cet organe de positionnement, notamment en l'absence d'une sollicitation de ce ressort de torsion.

Avantageusement, la platine peut comporter au moins une autre butée montée au droit d'un autre organe de guidage, et le dispositif fonctionnel peut comporter un autre organe élastiquement déformable comportant un ressort fixé au boîtier et coopérant avec cette autre butée, ce ressort comporte un ressort de torsion enroulé sur un autre organe de positionnement et deux bras s'étendant chacun à partir de l'une des branches dudit ressort de torsion, chaque bras venant au contact d'une face latérale de la butée.

Avantageusement, le dispositif fonctionnel peut comporter au moins un capteur apte à détecter la présence d'un obstacle et éventuellement à estimer la position dudit obstacle vis-à-vis du véhicule automobile. Ledit capteur pourra par exemple comporter un capteur radar, un capteur lidar ou une caméra.

De préférence, le boîtier pourra comporter une ouverture obturée par une glace de protection, le boîtier et la glace définissant un volume clos dans lequel est agencé le module fonctionnel.

On entend par organe de guidage un organe agencé pour guider un organe de positionnement du boîtier, qui se serait éloigné de sa position de repos du fait d'un choc sur le dispositif fonctionnel de sa position et qui est rappelé par l'organe élastiquement déformable, vers cette position de repos dans laquelle cet organe de guidage et cet organe de positionnement sont en contact.

Un organe de guidage pourra par exemple être un renfoncement aménagé dans la platine, présentant par exemple une ou plusieurs parois d'appui, jointives ou opposées, avec laquelle ou lesquelles un organe de positionnement peut venir en contact. Le renfoncement pourra notamment présenter un profil en « V » ou un profil en « U ».

Un organe de positionnement pourra par exemple être un ergot s'étendant depuis le boîtier et présentant une surface périphérique via laquelle il peut venir en contact avec un organe de guidage. L'ergot pourra notamment présenter une forme cylindrique.

Avantageusement, la platine peut former un cadre entourant le boîtier, les organes de guidage étant agencés sur tout le pourtour du cadre. Le cadre pourra par exemple comporter une pluralité de montants, au moins un organe de guidage étant agencé sur chaque montant.

Dans un exemple de réalisation de l'invention, le boîtier comporte au moins trois organes de positionnements, dits longitudinaux et la platine comporte au moins trois organes de guidage, dit longitudinaux. Le cas échéant, chacun desdits organes de positionnement longitudinaux est apte à venir au contact avec l'un des organes de guidage longitudinaux de sorte que le boîtier soit, dans sa position de repos, en appui plan contre la platine. Par exemple, dans le cas où le dispositif fonctionnel est un dispositif lumineux, les organes de guidage longitudinaux peuvent définir un plan sensiblement vertical auquel est perpendiculaire un axe optique du dispositif lumineux. Dans ce cas, les organes de positionnement et de guidage longitudinaux permettent d'assurer une immobilisation du boîtier dans sa position de repos selon cet axe optique.

Si on le souhaite, le boîtier pourra comporter quatre organes de positionnement longitudinaux et quatre organes de guidage longitudinaux. Cette configuration est particulièrement adaptée dans le cas où le dispositif fonctionnel est un dispositif lumineux formant une majeure partie, voire la totalité de la calandre du véhicule automobile, les dimensions du dispositif lumineux permettant de d'identifier un plan passant approximativement par chacun des organes de guidage longitudinaux. Par exemple, on pourra envisager d'agencer deux organes de positionnement longitudinaux sur un montant supérieur de la platine et deux organes de positionnement longitudinaux sur un montant inférieur de la platine, ces organes étant superposés verticalement deux à deux.

Avantageusement, chacun desdits organes de guidage longitudinaux de la platine comporte un renfoncement formé dans la platine et pourvu d'une paroi d'appui, chacun desdits organes de positionnement longitudinaux comportant un ergot s'étendant à partir du boîtier dans le renfoncement de l'un des organes de guidage longitudinaux de sorte que, dans la position de repos du boîtier, une surface périphérique dudit ergot soit en contact avec la paroi d'appui de ce renfoncement. Par exemple, chaque renfoncement pourra présenter un profil en V et chaque ergot pourra présenter une forme cylindrique. De préférence, dans le cas où le dispositif fonctionnel est un dispositif lumineux, ladite paroi d'appui pourra être une paroi sensiblement normale à un axe optique du dispositif lumineux. En variante, ladite paroi d'appui pourra être une paroi oblique vis-à-vis d'un axe optique du dispositif lumineux.

De façon alternative ou cumulative, le boîtier comporte au moins deux organes de positionnement, dits latéraux, et la platine comporte au moins deux organes de guidage, dits latéraux. Le cas échéant, chacun desdits organes de positionnement latéraux est apte à venir au contact avec l'un des organes de guidage latéraux de sorte que le boîtier soit, dans sa position de repos, en liaison linéaire rectiligne avec la platine. Par exemple, dans le cas où le dispositif fonctionnel est un dispositif lumineux, les organes de guidage latéraux pourront être agencée pour que la liaison linéaire rectiligne du boîtier avec la platine s'opère selon une direction sensiblement verticale, notamment de sorte à assurer une immobilisation du boîtier dans sa position de repos selon un axe horizontal perpendiculaire à un axe optique du dispositif lumineux.

Avantageusement, au moins deux organes de positionnement longitudinaux sont également des organes de positionnement latéraux, et au moins deux organes de guidage longitudinaux sont également des organes de guidage latéraux, ces organes de positionnement et de guidage étant dits doubles. Le cas échéant, le renfoncement de chaque organe de guidage double est pourvu de deux parois d'appui jointives, et l'ergot de chaque organe de positionnement double s'étend à partir du boîtier dans l'un desdits renfoncements des organes de guidage doubles de sorte que, dans la position de repos du boîtier, la surface périphérique de cet ergot soit en contact avec les deux parois d'appuis jointives de ce renfoncement. Dans le cas où le dispositif fonctionnel est un dispositif lumineux, les organes de positionnement et les organes de guidage doubles participent ainsi à l'immobilisation du boîtier dans sa position de repos tant selon l'axe optique du dispositif lumineux que selon un axe horizontal perpendiculaire à cet axe optique.

Avantageusement, les parois d'appui jointives d'un renfoncement pourront faire un angle de sensiblement 90° entre elles. Le cas échéant, le renfoncement pourra présenter un profil en V. De préférence, la hauteur de l'ergot de chaque organe de positionnement double pourra être sensiblement supérieure à celle du renfoncement de l'organe de guidage double dans lequel il s'étend, de sorte qu'ils forment ensemble une liaison de type centrage court. On augmente ainsi la capacité du boîtier à se mouvoir selon plusieurs directions, voire de réaliser des trajectoires complexes.

Si on le souhaite, chaque organe de guidage double pourra comporter deux dents s'étendant de part et d'autre de son renfoncement.

Selon un exemple non limitatif, la platine pourra comporter quatre butées montées chacune au droit de l'un des organes de guidage longitudinaux et doubles et le dispositif fonctionnel pourra comporter quatre organes élastiquement déformables comportant chacun un ressort fixé sur l'un des organes de guidage longitudinaux et doubles.

De façon alternative ou cumulative, le boîtier comporte au moins deux organes de positionnement, dits verticaux, et la platine comporte au moins deux organes de guidage, dits verticaux. Le cas échéant, chacun desdits organes de positionnement est apte à venir au contact avec un organe de guidage de la platine de sorte que le boîtier soit, dans sa position de repos, en liaison glissière avec la platine. Par exemple, les organes de guidage latéraux pourront être agencés pour que la liaison glissière s'opère selon une direction sensiblement horizontale, notamment de sorte à assurer une immobilisation du boîtier dans sa position de repos selon un axe sensiblement vertical.

Avantageusement, chacun desdits organes de guidage verticaux de la platine comporte un renfoncement formé dans la platine et pourvu de deux parois d'appui opposées et chacun desdits organes de positionnement verticaux comporte un ergot s'étendant à partir du boîtier dans le renfoncement d'un organe de guidage vertical de sorte que, dans la position de repos du boîtier, une surface périphérique dudit ergot soit en contact avec les parois d'appui opposées dudit renfoncement.

Le cas échéant, le renfoncement de chaque organe de guidage vertical pourra présenter un profil en U, les parois d'appui opposées de ce renfoncement étant sensiblement parallèles entre elles et étant normales à un axe sensiblement vertical. De préférence, chaque organe de positionnement vertical et l'organe de guidage vertical avec lequel il coopère pourront former ensemble une liaison de type centrage court.

Bien évidemment, on pourra concevoir d'autres types de liaison pour les organes de guidage et de positionnement longitudinaux, transversaux et verticaux sans sortir du cadre de la présente invention. En particulier, le nombre d'organes de guidage et d'organes de positionnement pour l'immobilisation du boîtier dans sa position de repos selon l'une des directions précédemment cités pourra varier et on pourra indifféremment envisager une liaison de type appui plan, une liaison de type linéaire rectiligne ou encore une liaison glissière pour l'immobilisation du boîtier dans sa position de repos selon l'une des directions précédemment citées.

Dans un mode de réalisation de l'invention, le dispositif fonctionnel est agencé en dispositif lumineux et le module fonctionnel est un module lumineux.

Un autre objet de l'invention est un véhicule comprenant un dispositif Ifonctionnel selon l'invention, la platine étant fixée au châssis du véhicule et/ou à la carrosserie du véhicule.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, une vue arrière d'un dispositif fonctionnel selon un mode de réalisation de l'invention ;
[Fig. 2] représente, schématiquement et partiellement, une vue de dessus du dispositif fonctionnel de la [Fig. 1] ;
[Fig. 3] représente, schématiquement et partiellement, une vue de côté du dispositif fonctionnel de la [Fig. 1] ;
[Fig. 4] représente, schématiquement et partiellement, un exemple de réalisation d'un organe élastiquement déformable employé dans le dispositif fonctionnel de la [Fig. 1].

Dans la description qui suit, les éléments identiques, par structure ou par fonction, apparaissant sur différentes figures conservent, sauf précision contraire, les mêmes références. En outre, les termes « longitudinal », « latéral », « vertical », « avant », « arrière », « haut » et « bas » doivent être interprétés dans le contexte de l'orientation du dispositif lumineux tel qu'il a été représenté, correspondant à une utilisation normale du dispositif fonctionnel, comme par exemple lorsqu'il est monté dans un véhicule automobile.

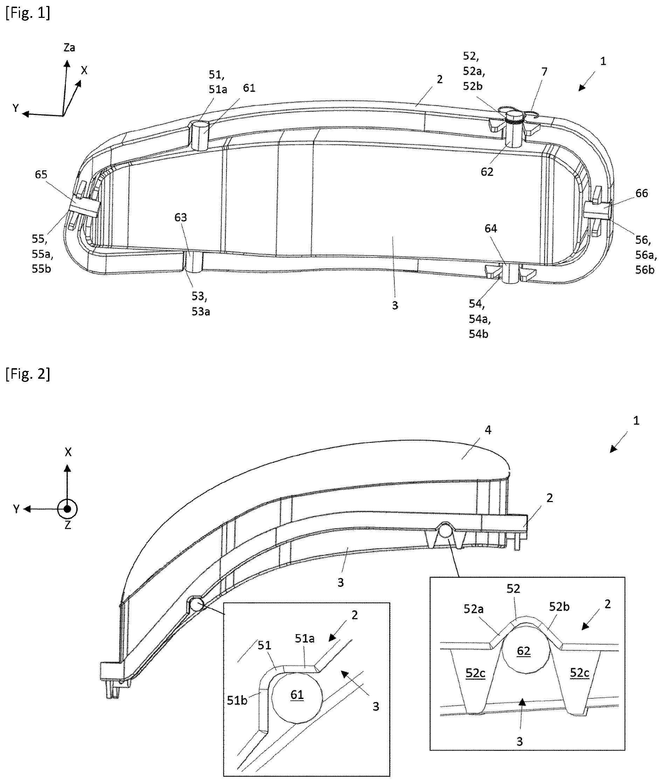

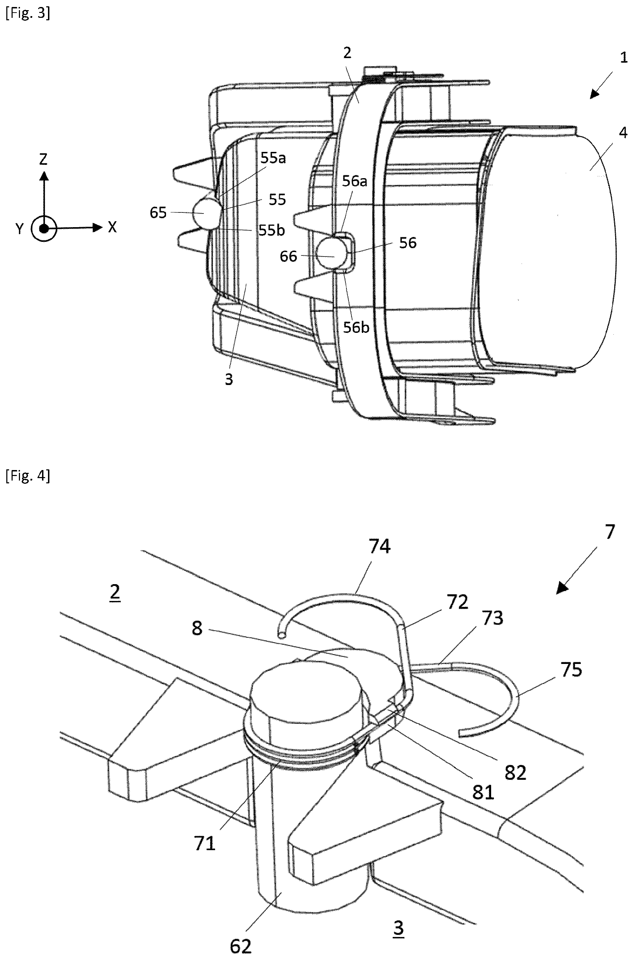

On a représenté en [Fig. 1] un dispositif fonctionnel 1 d'un véhicule automobile selon un mode de réalisation de l'invention. La [Fig. 2] représente une vue de dessus du dispositif fonctionnel 1 et la [Fig. 3] représente une vue de côté du dispositif fonctionnel 1.

Dans l'exemple décrit, le dispositif fonctionnel 1 est un dispositif lumineux 1 agencé en un projecteur avant gauche d'un véhicule automobile.

Le dispositif lumineux 1 comporte une platine 2 comprenant des organes de fixation (non représentés) du dispositif lumineux 1 à un châssis du véhicule. Ces organes de fixation pourront par exemple être constitués d'une pluralité de pattes de fixation s'étendant depuis la platine 2 et destinées à être vissées en une pluralité de points de fixation du châssis.

Le dispositif lumineux 1 comporte également un boîtier 3 fermé par une glace de protection 4, définissant un volume clos à l'intérieur duquel sont agencés une pluralité de modules lumineux (non représentés) et un capteur, par exemple de type lidar, apte à détecter la présence d'un obstacle et éventuellement à estimer la position dudit obstacle vis-à-vis du véhicule automobile. Le dispositif lumineux 1 présente ainsi un axe optique X, défini par la direction globale d'émission des modules lumineux agencés dans le boîtier 3. Le boîtier 3 s'étend par ailleurs transversalement selon un axe Y et verticalement selon un axe Z. On a ainsi rapporté ces axes X, Y et Z sur chacune des [Fig. 1] à [Fig. 3].

La platine 2 forme un cadre au travers duquel passe le boîtier 3, ce cadre formant une structure rigide via laquelle le boîtier 3 est fixé au véhicule lumineux. Le boîtier 3 est monté mobile, selon au moins trois degrés de liberté, sur la platine 2, de sorte qu'un contact sur la glace 4 puisse entraîner un recul du boîtier vis-à-vis de la platine 2, selon une translation et/ou une rotation quelconque. Le dispositif lumineux 1 est toutefois équipé d'une pluralité d'organes élastiquement déformables par lesquels le boîtier 3 est relié à la platine 2, de sorte que le boîtier 3 puisse être rappelé vers une position de repos isostatique vis-à-vis de la platine.

Afin de définir cette position de repos isostatique, la platine 2 comporte six organes de guidage 51 à 56, répartis sur tout le pourtour du cadre. Deux organes 51 et 52 sont agencés sur un montant supérieur 21 de la platine 2, deux organes 53 et 54 sont agencés sur un montant inférieur 22 de la platine 2, et deux organes 55 et 56 sont agencés chacun sur un montant latéral 23, respectivement 24, de la platine 2. La [Fig. 2] fait apparaître des grossissements des organes 51 et 52.

Les organes de guidage 51 à 54 sont des organes de guidage longitudinaux comportant chacun un renfoncement aménagé dans une paroi arrière de la platine 2. Les organes de guidage 52 et 54 sont également des organes de guidage latéraux, ces organes étant ainsi dits doubles.

Les renfoncements des organes 51 et 53 présentent un profil en V et sont pourvus à cet effet d'une paroi d'appui 51a, respectivement 53a, verticale et sensiblement normale à l'axe optique X. Le renfoncement de l'organe 51 est verticalement superposé avec le renfoncement de l'organe 53.

Les renfoncements des organes 52 et 54 présentent également un profil en V et sont pourvus à cet effet de deux parois d'appui 52a et 52b, respectivement 54a et 54b, jointives, faisant entre elles un angle de sensiblement 90°, et s'étendant chacune verticalement et de façon oblique à l'axe optique X. Le renfoncement de l'organe 52 est verticalement superposé avec le renfoncement de l'organe 54.

Les organes de guidage double 52 et 54 comportent par ailleurs chacun deux dents 52c, prolongeant les parois d'appui de leur renfoncement.

Les organes de guidage 55 et 56 sont des organes de guidage verticaux comportant chacun un renfoncement aménagé dans une paroi arrière de la platine 2. Chaque renfoncement présente un profil en U et est pourvu à cet effet de deux parois d'appui opposées 55a et 55b, respectivement 56a et 56b, parallèles entre elles et s'étendant chacune horizontalement en étant normales à l'axe Z. Les renfoncements sont également prolongés par des dents.

Pour coopérer avec ces organes de guidage et afin de définir la position de repos isostatique du boîtier 3, le boîtier 3 comporte six organes de positionnement 61 à 66.

Chaque organe de positionnement 61 à 66 comporte un ergot de forme cylindrique s'étendant depuis une paroi périphérique du boîtier et présentant une surface périphérique via laquelle il peut venir en contact avec l'un des organes de guidage 51 à 56. Les ergots sont ainsi répartis sur la paroi périphérique du boîtier de façon similaire aux renfoncements des organes de guidage 51 à 56. Les organes de positionnement 61 et 63 sont donc des organes de positionnement longitudinaux, les organes de positionnement 62 et 64 sont des organes de positionnement doubles, à savoir longitudinaux et transversaux, et les organes de positionnement 65 et 66 sont des organes de positionnement verticaux.

Les organes de guidage et les organes de positionnement, lorsqu'ils sont en contact, forment ainsi des liaisons entre le boîtier 3 et la platine 2 définissant une position isostatique du boîtier 3 sur la platine 2.

Plus précisément, chacun des ergots des organes de positionnement longitudinaux et doubles 61 à 64 est apte à venir au contact avec la ou les parois d'appui de l'un des organes de guidage longitudinaux 51 à 54 de sorte que le boîtier 3 soit, dans sa position de repos, en appui plan contre la platine 2, selon un plan sensiblement vertical et normal à l'axe optique X du dispositif lumineux. Cette liaison permet d'assurer une immobilisation du boîtier 3 dans sa position de repos selon cet axe optique X.

Chacun des ergots des organes de positionnement doubles 62 et 64 est par ailleurs apte à venir au contact avec les parois d'appui de l'un des organes de guidage doubles 52 et 54 de sorte que le boîtier 3 soit, dans sa position de repos, en liaison linéaire rectiligne avec la platine 2, selon une direction sensiblement verticale. Cette liaison permet d'assurer une immobilisation du boîtier 3 dans sa position de repos selon l'axe Y.

Chacun des ergots des organes de positionnement verticaux 65 et 66 est apte à venir au contact avec les parois d'appui de l'un des organes de guidage verticaux 55 et 56 de sorte que le boîtier soit, dans sa position de repos, en liaison glissière avec la platine, selon une direction sensiblement horizontale parallèle à l'axe Y. Cette liaison permet d'assurer une immobilisation du boîtier 3 dans sa position de repos selon l'axe Z.

On notera que pour les renfoncements des organes de guidage 51 et 53, lorsque l'ergot de l'organe de positionnement 61 et 63 est en contact avec la surface d'appui 51a, respectivement 53a de ce renfoncement, il existe un jeu entre une deuxième paroi 51b du profil en « V » de ce renfoncement et cet ergot. Par ailleurs, la hauteur de l'ergot de chaque organe de positionnement double 62 et 64 est sensiblement supérieure à celle du renfoncement de l'organe de guidage double 52 et 54 associé, de sorte qu'ils forment ensemble une liaison de type centrage court. Les ergots des organes de positionnement verticaux 65 et 66 sont également dimensionnés pour former un centrage court avec les renfoncements associés. Le boîtier 3 peut ainsi se mouvoir selon plusieurs directions et peut emprunter des trajectoires complexes, sans risquer de provoquer des contraintes de déformation fortes sur le boîtier 3.

Afin de permettre le rappel du boîtier 3 vers sa position de repos, le dispositif lumineux 1 comporte quatre organes élastiquement déformables 7 reliant le boîtier 3 à la platine 2. La platine 2 comporte quatre butées 8, prévues chacune au droit de l'un des organes de guidage 51 à 54 et chaque organe élastiquement déformable 7 comporte un ressort fixé sur l'un des organes de positionnement 61 à 64 et coopérant avec l'une desdites butées 8 de la platine.

Dans les [Fig. 1] à [Fig. 3], un seul de ces organes 7 et une seule de ces butées 8 ont été représentés, à des fins de clarté, étant entendu que ces organes et ces butées sont identiques et que la description qui va être faite de cet organe 7 et de cette butée 8, en lien avec la [Fig. 4], est applicable à tous les autres.

Le ressort comporte un ressort de torsion 71 enroulé sur l'ergot de l'organe de positionnement 62 et deux bras 72 et 73 s'étendant chacun à partir de l'une des branches dudit ressort de torsion.

Chaque bras 72 et 73 vient au contact d'une face latérale 81 de la butée 8, de part et d'autre de la butée.

Chaque bras 72 et 73 s'étend en faisant un angle avec le ressort 71 de sorte que les bras se croisent, derrière la butée, en faisant un angle entre eux sensiblement égal à 45°.

Le recul du boîtier 3 vis-à-vis de la platine 2, sous l'effort d'un contact exercé sur la glace 4, vient ainsi provoquer un écartement des bras 72 et 73, du fait du contact avec la butée 8, et donc une déformation du ressort de torsion 71 provoquant ainsi le rappel du boîtier 3 vers sa position de repos.

La face latérale 81 de la butée 8 présente un profil définissant une came coopérant avec chacun desdits bras 72 et 73. Cette came est agencée d'une part pour que le ressort de torsion 71 subisse une déformation seulement si un effort supérieur à un seuil donné est exercé sur le boîtier 3. D'autre part, la came est agencée pour que l'évolution de l'angle entre les bras 72 et 73 soit non linéaire avec un effort exercé sur le boîtier. En d'autres termes, il est possible de contrôler la façon dont le boîtier recule vis-à-vis de la platine et est rappelé vers sa position de repos.

La face latérale 81 de la butée 8 comporte un rebord 82 contre lequel viennent en appui les bras 72 et 73.

Enfin, l'extrémité de chacun des bras 72 et 73 est recourbée pour former un crochet 74 et 75 venant contre la butée 8 pour épouser le profil de la face latérale 81 et définir une position de fin de course du ressort.

La description qui précède explique clairement comment l'invention permet d'atteindre les objectifs qu'elle s'est fixée, à savoir obtenir un dispositif fonctionnel capable d'amortir de façon répétable un choc, quelle que soit la direction de ce choc, sans risquer d'endommager ou de dérégler les différents composants qu'il contient , en permettant au boîtier de ce dispositif fonctionnel de reculer sous l'effet du choc puis en rappelant le boîtier vers une position de repos isostatique.

En tout état de cause, l'invention ne saurait se limiter aux modes de réalisation spécifiquement décrits dans ce document, et s'étend en particulier à tous moyens équivalents et à toute combinaison techniquement opérante de ces moyens tels que définis par les revendications annexées. On pourra notamment envisager d'autres types de dispositifs fonctionnels qu'un dispositif lumineux, et notamment un dispositif de détection incorporant un radar, un lidar ou une caméra, ou encore un dispositif destiné à participer à une fonction de chauffage, ventilation et/ou climatisation du véhicule comme un radiateur, un ventilateur ou un climatiseur, ou encore un dispositif destiné à être agencé dans l'habitacle du véhicule comme un écran ou une interface.

## Revendications

1. Dispositif fonctionnel (1) d'un véhicule automobile, comportant une platine (2), un boîtier (3) et au moins un module fonctionnel agencé dans le boîtier, le boîtier étant monté mobile sur la platine par au moins un organe élastiquement déformable (7) apte à rappeler le boîtier vers une position de repos, dans lequel la platine comporte au moins une butée (8) et dans lequel le ou chaque organe élastiquement déformable comporte un ressort fixé au boîtier et coopérant avec la ou l'une desdites butées de la platine, **caractérisé en ce que** le ressort comporte un ressort de torsion (71) avec deux branches et deux bras (72, 73), chaque bras (72, 73) s'étendant à partir de l'une des branches dudit ressort de torsion, et venant au contact d'une face latérale (81) de la butée, de part et d'autre de la butée (8).

2. Dispositif fonctionnel (1) selon la revendication précédente, dans lequel chaque bras (72, 73) s'étend depuis l'une des branches du ressort (71) en faisant un angle avec cette branche de sorte que les bras se croisent.

3. Dispositif fonctionnel (1) selon l'une des revendications précédentes, dans lequel ladite face latérale (81) de la butée (8) présente un profil définissant une came coopérant avec chacun desdits bras (72, 73).

4. Dispositif fonctionnel (1) selon la revendication précédente, dans lequel la came est agencée pour que le ressort de torsion (71) subisse une déformation seulement si un effort supérieur à un seuil donné est exercé sur le boîtier (3).

5. Dispositif fonctionnel (1) selon la revendication précédente, dans lequel la came est agencée pour que l'évolution de l'angle entre les bras (72, 73) du ressort provoqué par un effort exercé sur le boîtier (3) soit non linéaire.

6. Dispositif fonctionnel (1) selon l'une des revendications précédentes, dans lequel la face latérale (81) de la butée (8) comporte un rebord (82) contre lequel viennent en appui lesdits bras (72, 73) du ressort.

7. Dispositif fonctionnel (1) selon l'une des revendications précédentes, dans lequel l'extrémité de chacun des bras (72, 73) est recourbée pour former un crochet.

8. Dispositif fonctionnel (1) selon l'une des revendications précédentes, la platine (2) comprenant des organes de fixation du dispositif fonctionnel à un châssis du véhicule, **caractérisé en ce que** la platine comporte deux organes de guidage (51, 52, 53, 54, 55, 56), **en ce que** le boîtier (3) comporte au moins deux organes de positionnement (61, 62, 63, 64, 65, 66), chaque organe de positionnement étant associé à l'un des organes de guidage en étant apte à venir au contact d'au moins un point de cet organe de guidage associé pour définir ladite position de repos du boîtier sur la platine, le boîtier étant monté mobile, selon au moins trois degrés de liberté, sur la platine par ledit au moins un organe élastiquement déformable (7) apte à rappeler le boîtier vers ladite position de repos.

9. Dispositif fonctionnel (1) selon la revendication précédente, dans lequel la butée (8) est montée au droit d'un des organes de guidage (51, 52, 53, 54, 55, 56) et dans lequel le ressort dudit organe élastiquement déformable (7) est fixé sur l'un des organes de positionnement (61, 62, 63, 64, 65, 66).

10. Dispositif fonctionnel (1) selon la revendication précédente, dans lequel le ressort de torsion (71) dudit organe élastiquement déformable (7) est enroulé sur ledit organe de positionnement (61, 62, 63, 64, 65, 66).

11. Dispositif fonctionnel (1) selon la revendication précédente, dans laquelle la platine (2) forme un cadre entourant le boîtier, les organes de guidage (51, 52, 53, 54, 55, 56) étant agencés sur tout le pourtour du cadre.

12. Dispositif fonctionnel (1) selon l'une des revendications précédentes, **caractérisé en ce qu'**il est agencé en dispositif lumineux et **en ce que** le module fonctionnel est un module lumineux.

13. Véhicule comprenant un dispositif fonctionnel (1) selon l'une quelconque des revendications précédentes, la platine (2) étant fixée au châssis du véhicule et/ou à la carrosserie du véhicule

## Patentansprüche

1. Funktionsvorrichtung (1) eines Kraftfahrzeugs, umfassend eine Platte (2), ein Gehäuse (3) und mindestens ein im Gehäuse angeordnetes Funktionsmodul, wobei das Gehäuse beweglich auf der Platte durch mindestens ein elastisch verformbares Element (7) montiert ist, das in der Lage ist, das Gehäuse in eine Ruheposition zurückzuführen, wobei die Platte mindestens einen Anschlag (8) umfasst und wobei das oder jedes elastisch verformbare Element eine am Gehäuse befestigte Feder umfasst, die mit dem oder einem der Anschläge der Platte zusammenwirkt, **dadurch gekennzeichnet, dass** die Feder eine Torsionsfeder (71) mit zwei Zweigen und zwei Armen (72, 73) umfasst, wobei jeder Arm (72, 73) von einem der Zweige der Torsionsfeder ausgeht und mit einer Seitenfläche (81) des Anschlags auf beiden Seiten des Anschlags (8) in Kontakt kommt.

2. Funktionsvorrichtung (1) nach dem vorhergehenden Anspruch, wobei jeder Arm (72, 73) von einem der Zweige der Feder (71) in einem Winkel zu diesem Zweig ausgeht, so dass sich die Arme kreuzen.

3. Funktionsvorrichtung (1) nach einem der vorhergehenden Ansprüche, wobei die Seitenfläche (81) des Anschlags (8) ein Profil aufweist, das einen Nocken definiert, der mit jedem der Arme (72, 73) zusammenwirkt.

4. Funktionsvorrichtung (1) nach dem vorhergehenden Anspruch, wobei der Nocken so angeordnet ist, dass die Torsionsfeder (71) nur dann eine Verformung erfährt, wenn eine Kraft größer als ein gegebener Schwellenwert auf das Gehäuse (3) ausgeübt wird.

5. Funktionsvorrichtung (1) nach dem vorhergehenden Anspruch, wobei der Nocken so angeordnet ist, dass die Entwicklung des Winkels zwischen den Armen (72, 73) der Feder, die durch eine auf das Gehäuse (3) ausgeübte Kraft verursacht wird, nicht linear ist.

6. Funktionsvorrichtung (1) nach einem der vorhergehenden Ansprüche, wobei die Seitenfläche (81) des Anschlags (8) einen Rand (82) umfasst, gegen den sich die Arme (72, 73) der Feder abstützen.

7. Funktionsvorrichtung (1) nach einem der vorhergehenden Ansprüche, wobei das Ende jedes der Arme (72, 73) gekrümmt ist, um einen Haken zu bilden.

8. Funktionsvorrichtung (1) nach einem der vorhergehenden Ansprüche, wobei die Platte (2) Befestigungsmittel der Funktionsvorrichtung an einem Fahrgestell des Fahrzeugs umfasst, **dadurch gekennzeichnet, dass** die Platte zwei Führungselemente (51, 52, 53, 54, 55, 56) umfasst, dass das Gehäuse (3) mindestens zwei Positionierungselemente (61, 62, 63, 64, 65, 66) umfasst, wobei jedes Positionierungselement einem der Führungselemente zugeordnet ist, indem es mit mindestens einem Punkt dieses zugeordneten Führungselements in Kontakt kommen kann, um die Ruheposition des Gehäuses auf der Platte zu definieren, wobei das Gehäuse beweglich nach mindestens drei Freiheitsgraden auf der Platte durch das mindestens eine elastisch verformbare Element (7) montiert ist, das in der Lage ist, das Gehäuse in die Ruheposition zurückzuführen.

9. Funktionsvorrichtung (1) nach dem vorhergehenden Anspruch, wobei der Anschlag (8) gegenüber einem der Führungselemente (51, 52, 53, 54, 55, 56) montiert ist und wobei die Feder des elastisch verformbaren Elements (7) an einem der Positionierungselemente (61, 62, 63, 64, 65, 66) befestigt ist.

10. Funktionsvorrichtung (1) nach dem vorhergehenden Anspruch, wobei die Torsionsfeder (71) des elastisch verformbaren Elements (7) auf dem Positionierungselement (61, 62, 63, 64, 65, 66) aufgewickelt ist.

11. Funktionsvorrichtung (1) nach dem vorhergehenden Anspruch, wobei die Platte (2) einen Rahmen bildet, der das Gehäuse umgibt, wobei die Führungselemente (51, 52, 53, 54, 55, 56) um den gesamten Umfang des Rahmens angeordnet sind.

12. Funktionsvorrichtung (1) nach einem der vorhergehenden Ansprüche, **dadurch gekennzeichnet, dass** sie als Beleuchtungsvorrichtung angeordnet ist und dass das Funktionsmodul ein Beleuchtungsmodul ist.

13. Fahrzeug mit einer Funktionsvorrichtung (1) nach einem der vorhergehenden Ansprüche, wobei die Platte (2) am Fahrgestell des Fahrzeugs und/oder an der Karosserie des Fahrzeugs befestigt ist.

## Claims

1. A functional device (1) of an automotive vehicle, comprising a plate (2), a housing (3) and at least one functional module arranged in the housing, the housing being movably mounted on the plate by at least one elastically deformable member (7) capable of returning the housing to a rest position, wherein the plate includes at least one stop (8) and wherein the or each elastically deformable member includes a spring fixed to the housing and cooperating with the or one of said stops of the plate, **characterized in that** the spring comprises a torsion spring (71) with two branches and two arms (72, 73), each arm (72, 73) extending from one of the branches of said torsion spring, and coming into contact with a lateral face (81) of the stop, on either side of the stop (8).

2. The functional device (1) according to the preceding claim, wherein each arm (72, 73) extends from one of the branches of the spring (71) at an angle to this branch so that the arms cross each other.

3. The functional device (1) according to one of the preceding claims, wherein said lateral face (81) of the stop (8) has a profile defining a cam cooperating with each of said arms (72, 73).

4. The functional device (1) according to the preceding claim, wherein the cam is arranged so that the torsion spring (71) undergoes deformation only if a force greater than a given threshold is exerted on the housing (3).

5. The functional device (1) according to the preceding claim, wherein the cam is arranged so that the evolution of the angle between the arms (72, 73) of the spring caused by a force exerted on the housing (3) is non-linear.

6. The functional device (1) according to one of the preceding claims, wherein the lateral face (81) of the stop (8) includes a rim (82) against which said arms (72, 73) of the spring rest.

7. The functional device (1) according to one of the preceding claims, wherein the end of each of the arms (72, 73) is curved to form a hook.

8. The functional device (1) according to one of the preceding claims, the plate (2) comprising means for fixing the functional device to a chassis of the vehicle, **characterized in that** the plate includes two guiding members (51, 52, 53, 54, 55, 56), **in that** the housing (3) includes at least two positioning members (61, 62, 63, 64, 65, 66), each positioning member being associated with one of the guiding members by being able to come into contact with at least one point of this associated guiding member to define said rest position of the housing on the plate, the housing being movably mounted, according to at least three degrees of freedom, on the plate by said at least one elastically deformable member (7) capable of returning the housing to said rest position.

9. The functional device (1) according to the preceding claim, wherein the stop (8) is mounted opposite one of the guiding members (51, 52, 53, 54, 55, 56) and wherein the spring of said elastically deformable member (7) is fixed on one of the positioning members (61, 62, 63, 64, 65, 66).

10. The functional device (1) according to the preceding claim, wherein the torsion spring (71) of said elastically deformable member (7) is wound on said positioning member (61, 62, 63, 64, 65, 66).

11. The functional device (1) according to the preceding claim, wherein the plate (2) forms a frame surrounding the housing, the guiding members (51, 52, 53, 54, 55, 56) being arranged around the entire perimeter of the frame.

12. The functional device (1) according to one of the preceding claims, **characterized in that** it is arranged as a lighting device and **in that** the functional module is a lighting module.

13. A vehicle comprising a functional device (1) according to any one of the preceding claims, the plate (2) being fixed to the chassis of the vehicle and/or to the bodywork of the vehicle.
